# EUROPÄISCHE PATENTANMELDUNG

(11) **EP 2 234 005 A1**
(43) Veröffentlichungstag der Anmeldung: **29.09.2010**
(21) Anmeldenummer: 09156450.0
(22) Anmeldetag: 27.03.2009
(51) Int. Cl.: G06F 3/041, G06F 3/038, G06F 3/033, G05B 19/418

(54) **Bedienvorrichtung**

(71) Anmelder: Siemens Aktiengesellschaft, 80333 München (DE)
(72) Erfinder: Kröber, Edmund, 90556, Cadolzburg (DE); Ahmad, Neil, 90475, Nürnberg (DE); Sitte, Michael, 91325, Adelsdorf (DE)

(57) **Zusammenfassung**

Bedienvorrichtung (1) zur Beobachtung und Bedienung einer technischen Anlage mit einem berührungssensitiven Display (2), wobei zur Erhöhung der Sicherheit einer Bedienhandlung ein zusätzlicher berührungssensitiver Bereich (11, ...,14) außerhalb einer Fläche, welche durch das Display (2) belegt ist, angeordnet ist.

## Beschreibung

Die Erfindung betrifft eine Bedienvorrichtung zur Beobachtung und Bedienung einer technischen Anlage mit einem berührungssensitiven Display.

Technische Anlagen werden mit Hilfe von programmierbaren Vorrichtungen bedient, die vielfach ein Automatisierungssystem darstellen können bzw. ein Bestandteil eines solchen sein können. Unter einer technischen Anlage werden dabei alle Arten von technischen Geräten und Systemen sowohl in Einzelanordnung als auch in einer z.B. über einen Feldbus datentechnisch miteinander vernetzten Anordnung verstanden. So sind unter technischen Anlagen z.B. im Umfeld einer industriellen Anwendung einzelne Betriebsmittel zu verstehen, wie z.B. Antriebe, Bearbeitungsmaschinen, Fertigungsroboter usw.. Als eine technische Anlage wird aber auch eine gesamte Produktionsanlage angesehen, bei der u.U. mit lokal verteilten Betriebsmitteln ein gesamter technischer Prozess z.B. in einer chemischen Anlage, einer Fertigungsanlage oder verarbeitenden Anlage, ausgeführt wird.

Bei technischen Anlagen ist es häufig notwendig, das bestimmte Aktionen aus Sicherheitsgründen erst dann ausgelöst werden, wenn eine vorangegangene Bedienhandlung von einer Person unter Einsatz von beiden Händen vorgenommen worden ist. Mit einer solchen Zweihandbedienung kann z.B. bei großen Bearbeitungsmaschinen ein Schutz der Bedienperson ermöglicht werden, in dem sichergestellt ist, dass vor einem Start der gewünschten Aktion für die technische Anlage die Bedienperson einen möglichen Gefahrenbereich der technischen Anlage verlassen hat. Mit einer Zweihandbedienung kann aber auch die Sicherheit einer Bedienung erhöht werden, in dem der positive Wille eines Bedieners, eine bestimmte Bedienhandlung vorzunehmen, besonders aktiviert wird. Möglicherweise voreilige Einhandbedienungen oder zufällige Berührungen werden dadurch erschwert bzw. vermieden.

Derartige Bedienvorrichtungen sind auch als HMI-Geräte bekannt, wobei HMI für "Human Machine Interface" steht. Bei den HMI-Geräten spielen derartige Geräte mit flächigen Anzeige- und Bedieneinheiten eine besonders bedeutende Rolle. Es handelt sich dabei um Kombinationsgeräte, die nicht nur eine Anzeige, insbesondere von aktuellen Zuständen der technischen Einrichtungen ermöglichen, sondern sie ermöglichen auch, über die Anzeigefläche Bedienhandlungen vorzunehmen und somit in der technischen Anlage Auslösehandlungen zu aktivieren. Es können z.B. interaktive Prozessabbilder generiert werden, welche die Auslösung von Bedienhandlungen an ausgewählten Stellen des Prozessabbildes direkt auf dem Display ermöglichen. In der Praxis werden als flächige Anzeige- und Bedieneinheiten insbesondere berührungssensitive Displays eingesetzt. Als Beispiel hierfür sollen sogenannte "Touchscreens" genannt werden.

Nachteilig an den zuvor genannten flächigen Anzeige- und Bedieneinheiten ist es aber bei der Durchführung der oben beschriebenen Zweihandbedienung zwei Auslösehandlungen sicher zu erkennen.

In der DE 101 61 924 A1 ist ein Verfahren zur Zweihandbedienung einer flächigen Anzeige- und Bedieneinheit mit einem berührungssensitiven Display offenbart. Nachteilig an diesem Verfahren ist es, dass eine Lage eines virtuellen Aktivitätsbereiches auf der Anzeige- und Bedieneinheit definiert wird und durch eine Interpolation zweier aktivierter Aktivitätsbereiche ein Signal für einen dritten Bereich ausgegeben wird. Aus diesem Signal für den dritten Bereich wird dann anhand einer Simulation auf zwei mögliche voneinander unabhängige gedrückte Aktivitätsbereiche geschlossen. Nachteilig an diesem Verfahren ist es, dass aufgrund von Softwarefehlern oder aufgrund von Fehlern in dem berührungssensitiven Touchscreen bzw. in dem über das Display gezogenen Touchsensor Fehler auftreten können, wodurch ein geforderter Sicherheitsstandard nicht gewährleistet ist.

Aufgabe der vorliegenden Erfindung ist es eine Bedienvorrichtung anzugeben, welches eine sichere Zweihandbedienung ermöglicht.

Die Aufgabe wird dadurch gelöst, dass bei einer eingangs genannten Bedienvorrichtung ein zusätzlicher berührungssensitiver Bereich außerhalb einer Fläche, welche durch das Display belegt ist, angeordnet ist. Für eine Bedienvorrichtung, vorzugsweise mit einem Touchpanel, kann durch den zusätzlichen berührungssensitiven Bereich eine Zweihandbedienung realisiert werden. Beispielsweise darf bei der Bedienung eines Roboterarmes, eine Achse eines Roboterarmes nur dann verfahren, solange zwei unabhängig voneinander erfassbare Bedienbereiche aktiviert sind. Der berührungssensitive Bereich ist dabei in der Bedienvorrichtung getrennt von dem berührungssensitiven Display angeordnet. Dies bietet den Vorteil, dass für sicherheitsrelevante Funktionen an der Bedienvorrichtung keine zusätzliche Eingabehardware, wie z.B. ein Langhubtaster, notwendig ist. Dies hat den Vorteil, dass eine Bedienfront als eine gleichmäßig glatte Ebene ausgeführt werden kann, welches z.B. beim Einsatz in industriellen Prozessen mit Staub- und Schmutzbelastung den Vorteil hat, dass die Bedienoberfläche leicht zu reinigen ist und sich keine ungewollten Ablagerungen auf der Bedienvorrichtung absetzen. Insbesondere in der Nahrungs- und Genussmittelindustrie ist dies eine geforderte Eigenschaft für Bedienvorrichtungen eines Herstellungsprozesses für Lebensmittel.

In einer optimierten Ausgestaltung der Bedienvorrichtung ist zur Erhöhung der Sicherheit dem berührungssensitiven Bereich eine Nebenkontrolleinheit zugeordnet, welche dazu ausgestaltet ist, unabhängig von einer dem Display zugeordneten Hauptkontrolleinheit Eingabesignale zu verarbeiten. Es existiert bei der Bedienvorrichtung also eine Hauptkontrolleinheit, welche dazu ausgestaltet ist, Eingabesignale auf dem berührungssensitiven Display entgegenzunehmen. Dabei ist die Bedienvorrichtung mit einer zusätzlich zu der Hauptkontrolleinheit in der Steuerungselektronik der Bedienvorrichtung angeordneten Nebenkontrolleinheit ausgestaltet. Vorteilhaft hieran ist gegenüber der DE 101 61 924 A1, dass für eine Zweihandbedienung, im Gegensatz zu dem Stand der Technik, wirklich zwei separate Auswerteeinheiten vorhanden sind und damit die Sicherheit für eine über eine Zweihandbedienung auszulösende Aktion erhöhen.

Weiterhin ist es von Vorteil, wenn ein Mikroprozessor an die Hauptkontrolleinheit und an die Nebenkontrolleinheit angeschlossen ist. Die dem Mikroprozessor zugeführten voneinander unabhängig erfassten Eingabesignale können in dem Mikroprozessor ausgewertet werden und gegebenenfalls programmtechnisch einer zusätzlichen Sicherheitsüberprüfung unterzogen werden, bevor sie eine endgültige Bedienhandlung in der technischen Anlage auslösen.

Insbesondere für Bedienvorrichtungen im Einsatz von industriellen Prozessen ist es von Vorteil, wenn der berührungssensitive Bereich als resistiver Touchsensor ausgestaltet ist. Da bei der Bedienung in industriellen Bereichen die Bediener häufig Schutzbekleidung, insbesondere Schutzhandschuhe, tragen ist ein sicheres Erkennen einer Bedienhandlung mit einem beispielsweise kapazitiven Touchsensor nicht möglich.

Eine weitere Ausgestaltungsvariante der Erfindung ist es, dass der berührungssensitive Bereich in eine Mehrzahl von Segmenten unterteilt ist. Dies kann z.B. für richtungsabhängige Zweihandbedienhandlungen von Vorteil sein und die Sicherheit weiter erhöhen, wenn die einzelnen Segmente wiederum den Segmenten zugeordneten weiteren Segment-Nebenkontrolleinheiten aufweisen und jede dieser Segment-Nebenkontrolleinheiten ihre Signale weiter an den Mikroprozessor leiten.

Vorzugsweise wird die Bedienvorrichtung derart ausgestaltet, dass der berührungssensitive Bereich in einem Rahmen angeordnet ist. Üblicherweise sind HMI-Bedienvorrichtungen für die Industrie in ein robustes Gehäuse integriert, beispielsweise aus Aludruckguss. In diesem Gehäuse ist das Display sicher gegen Erschütterungen und äußere Einflüsse untergebracht. Die zusätzlichen berührungssensitiven Bereiche können dann in vorteilhafter Weise für eine Bedienung an der Bedienvorrichtung in diesem Gehäuse angeordnet werden. Die Anordnung erfolgt dabei vorzugsweise derart, dass der Bediener das Gehäuse umgreifen kann und dabei die berührungssensitiven Bereiche aktiviert und gewährleistet ist, dass er eine Sicht auf das Display hat.

In weiterer Ausgestaltung der Bedienvorrichtung sind zumindest ein erster berührungssensitiver Bereich und ein vierter berührungssensitiver Bereich derart gegenüber angeordnet, dass ein Bediener zur Erfüllung einer Sicherheitsfunktion eine Zweihandbedienung durchführen muss. Für den Fall, dass die berührungssensitiven Bereiche innerhalb des Rahmens angeordnet sind, ist es vorstellbar, dass bei einer Draufsicht, Frontalansicht auf die Bedienvorrichtung in einem linken Teil des Tragrahmens des Displays der erste berührungssensitive Bereich und in einem rechten Teil des Tragrahmens der vierte berührungssensitive Bereich angeordnet ist. Insbesondere bei einem vorzugsweise von oben aufgehängten Display zur Bedienung eines Prozesses ist es so für den Bediener möglich, den Tragrahmen der Bedienvorrichtung links und rechts, also beidhändig, zu umfassen und die Zweihandbedienung für eine die Sicherheit gefährdende Aktion der technischen Anlage auszulösen.

Ein Ausführungsbeispiel wird in der Zeichnung näher erläutert. Es zeigen:

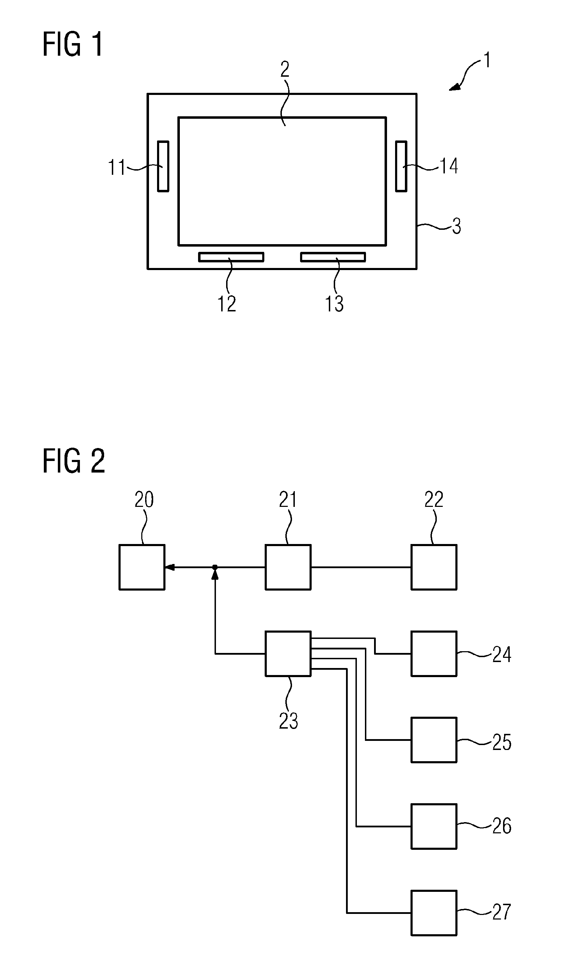

FIG 1 eine Bedienvorrichtung 1 in einer Frontalansicht und FIG 2 ein Blockschaltbild zur Auswertung der Eingabesignale.

Gemäß FIG 1 ist eine Bedienvorrichtung 1 zur Beobachtung und zur Bedienung einer technischen Anlage mit einem berührungssensitiven Display 2 dargestellt. Das Display 2, welches mittels eines LCD-Displays mit einem darüber angeordnetem resistiven Touchsensor ausgebildet ist, ist in einem Rahmen 3 eingefasst. Der Rahmen 3 ist dabei als ein Aludruckgusstragrahmensystem ausgestaltet. In einem linken Teil des Rahmens 3 ist in einem senkrecht stehenden Teilsegment des Rahmens 3 ein erster berührungssensitiver Bereich 11 angeordnet. In einem weiteren Segment des Rahmens 3 ist gegenüber des ersten berührungssensitiven Bereiches ein vierter berührungssensitiver Bereich 14 angeordnet. Der erste berührungssensitive Bereich 11 und der vierte berührungssensitive Bereich 14 weisen dabei einen derart großen Abstand auf, dass es unmöglich ist, mit einer Hand beide Bereiche zu berühren. Leicht kann man sich vorstellen, dass beispielsweise bei einem 19 Zoll-Display bei einer Berührung mit der linken Hand des ersten berührungssensitiven Bereiches 11 und einer Berührung des vierten sensitiven Bereiches 14 mit der rechten Hand, die beiden menschlichen Hände ungefähr Schulterbreit auseinander stehen. Dies ist eine gewollte, bewusste Bedienhandlung, welche die Sicherheit erhöht. Für weitere Bedienhandlungen sind in einem unteren Teilsegment des Tragrahmens ein zweiter berührungssensitiver Bereich 12 und ein dritter berührungssensitiver Bereich 13 angeordnet.

Durch eine Belegung der berührungssensitiven Bereiche 11 bis 14 mit vorzugsweise globalen Funktionen können diese aus dem Displaybereich nach außen verlagert werden, womit als zusätzlicher Vorteil ein Gewinn an Visualisierungsfläche resultiert. Bereiche außerhalb des Displays 2, die auf Berührung reagieren und derart ausgestaltet sind, dass sie auch Gesten erkennen können, erlauben in Verbindung mit dem Display 2 eine erweiterte bzw. neue Bedienfunktionalität. Der erste berührungssensitive Bereich 11 bis zum vierten berührungssensitiven Bereich 14, kann auch zusätzlich in kleinere Segmente unterteilt sein, wobei jedes Segment einen einzelnen berührungssensitiven Bereich darstellt. Dadurch wird das Erkennen von Gesten innerhalb eines größeren Bereiches z.B. ein "Wischen" von rechts nach links ermöglicht. Dabei kann ein Projekteur für eine Bedienvorrichtung über eine Engineeringsoftware festlegen, welche Funktionen ausgeführt werden. Beispielsweise ist es möglich:
a) Drücken des linken oder des rechten berührungssensitiven Bereiches blättert ein Bild zurück bzw. vor.
b) Der rechte Bereich unterhalb des Displays 2 dient der Einstellung der Helligkeit "Wischen" nach rechts erhöht die Helligkeit, "Wischen" nach links verringert die Helligkeit.
c) Der linke Bereich unterhalb des Displays 2 dient der Freigabe einer sicherheitsrelevanten Funktion. Er muss gedrückt bleiben, um die zugehörige Funktion ausführen zu können.

Gemäß FIG 2 wird die Verschaltung von Eingangssignalen unterschiedlicher Sensoren an einen Mikroprozessor 20 verdeutlicht. Voneinander unabhängige Eingangssignale als Eingabesignale bzw. Eingabebedienhandlungen der Sensoren erhält der Mikroprozessor 20 zum Einen über die Hauptkontrolleinheit 21, welche auf dem flächig ausgeprägten Display 2 der Bedienvorrichtung 1 ausgeführt werden. Über eine Nebenkontrolleinheit 23 erhält der Mikroprozessor 20 zum Anderen unabhängig von der Hauptkontrolleinheit 21 Eingabesignale der berührungssensitiven Bereiche 11,...,14 aus FIG 1, wobei die berührungssensitiven Bereiche 11,...,14 hier durch einen ersten Sensor 24, einen zweiten Sensor 25 und einen dritten und vierten Sensor 26 und 27 angedeutet sind. Die Sensoren 24 bis 27 sind als resistive Touchsensoren ausgestaltet.

## Patentansprüche

1. Bedienvorrichtung (1) zur Beobachtung und Bedienung einer technischen Anlage mit einem berührungssensitiven Display(2), **dadurch gekennzeichnet, dass** ein zusätzlicher berührungssensitiver Bereich (11,...,14) außerhalb einer Fläche, welche durch das Display (2) belegt ist, angeordnet ist.

2. Bedienvorrichtung (1) nach Anspruch 1,
wobei dem berührungssensitiven Bereich (11,...,14) eine Nebenkontrolleinheit (23) zugeordnet ist, welche dazu ausgestaltet ist, unabhängig von einer dem Display (2) zugeordneten Hauptkontrolleinheit (21) Eingabesignale zu verarbeiten.

3. Bedienvorrichtung (1) nach Anspruch 2,
wobei ein Mikroprozessor (20) an die Hauptkontrolleinheit (21) und an die Nebenkontrolleinheit (23) angeschlossen ist.

4. Bedienvorrichtung (1) nach einem der Ansprüche 1 bis 3,
wobei der berührungssensitive Bereich (11,...,14) als resistiver Touchsensor ausgestaltet ist.

5. Bedienvorrichtung (1) nach einem der Ansprüche 1 bis 4,
wobei der berührungssensitive Bereich (11,...,14) in eine Mehrzahl von Segmenten unterteil ist.

6. Bedienvorrichtung (1) nach einem der Ansprüche 1 bis 5,
wobei der berührungssensitive Bereich (11,...,14) in einem Gehäuse (3) angeordnet ist.

7. Bedienvorrichtung (1) nach einem der Ansprüche 1 bis 6,
wobei zumindest ein erster berührungssensitiver Bereich (11) und ein vierter berührungssensitiver Bereich (14) derart gegenüber angeordnet sind, dass ein Bediener zur Erfüllung einer Sicherheitsfunktion eine Zweihandbedienung durchführen muss.
